# EUROPÄISCHE PATENTSCHRIFT

(11) **EP 0 434 894 B1**
(45) Veröffentlichungstag und Bekanntmachung des Hinweises auf die Patenterteilung: **25.08.1993**
(21) Anmeldenummer: 90110785.4
(22) Anmeldetag: 07.06.1990
(51) Int. Cl.: B60S 1/48

(54) **Scheibenreinigungsanlage**
Windshield cleaning arrangement
Dispositif de nettoyage de vitre

(30) Priorität: 02.12.1989 DE 3939942
(43) Veröffentlichungstag der Anmeldung: 03.07.1991
(73) Patentinhaber: VDO Adolf Schindling AG, D-60487 Frankfurt (DE)
(72) Erfinder: Wallrafen, Werner, D-6231 Schwalbach/Ts. (DE)
(74) Vertreter: Klein, Thomas, Dipl.-Ing. (FH)

(56) Entgegenhaltungen:
- EP-A- 0 363 526
- DE-A- 2 600 379
- DE-A- 3 638 336
- FR-A- 2 443 162
- US-A- 4 618 096
- US-A- 4 768 716

## Beschreibung

Die Erfindung betrifft eine Scheibenreinigungsanlage, insbesondere für die Frontscheibe eines Kraftfahrzeugs, mit mindestens einer Düse zum Versprühen von Reinigungsflüssigkeit in einem auf die zu reinigende Scheibe gerichteten Strahl, dessen Strahlrichtung vertikal periodisch modulierbar ist.

Um den Erhebugswinkel des Strahls einer Scheibenreinigungsanlage weitgehend unabhängig vom Fahrtwind konstant zu halten, sind Scheibenreinigungsanlagen bekannt geworden (DE 30 47 396 A1, DE 26 00 379 A1 sowie EP-A-363 526), bei welchen die Düse bzw. die Pumpe in Abhängigkeit von der Fahrzeuggeschwindigkeit gesteuert wird. Für einen guten Reinigungseffekt ist jedoch eine möglichst großflächige Wasserbenetzung erforderlich. Dazu ist bei einer anderen bekannten Scheibenreinigungsanlage DE 25 60 546 C2 vorgesehen, den Strahl in Querrichtung mit im wesentlichen konstanter Geschwindigkeit so schnell hin- und herzuschwenken, daß er zu Tröpfchen aufreißt. Dieses ist jedoch nicht sinnvoll, da hierbei eine übermäßige Windablenkung durch Fahrtwind und Seitenwind besteht. Ein stabiler punktförmiger Strahl dagegen hat jedoch nur eine partielle Benetzung der Scheibe zur Folge.

Scheibenreinigungsanlagen der eingangs genannten Art sind aus der DE-A-36 38 336 und der US-A-46 18 096 bekannt. Die vertikal periodische Modulierung der Strahlrichtung erfolgt dabei durch eine Modulierbarkeit des Druckes der Reinigungsflüssigkeit. Damit wird eine großflächige Benetzung der Scheibe mit Reinigungsflüssigkeit erreicht. Durch den entlang der Frontscheibe streichenden geschwindigkeitsabhängigen Fahrtwind wird der Flüssigkeitsstrtahl sowie die auf die Frontscheibe auftreffende Flüssigkeit zum oberen Bereich der Frontscheibe hin abgelenkt. Dies bedeutet, daß bei hohen Fahrgeschwindigkeiten im oberen Bereich des Modulationshubes ein erheblicher Teil der Reinigungsflüssigkeit durch den Fahrtwind vor Auftreffen auf die Frontscheibe so weit abgelenkt wird, daß sie nicht mehr die Frontscheibe erreicht und somit zu einer mangelhaften Reinigung des oberen Frontscheibenbereichs führt.

Aufgabe der Erfindung ist es, bei einer Scheibenreinigungsanlage der eingangs genannten Art sowohl bei niedrigen Fahrzeuggeschwindigkeiten als auch bei hohen Fahrzeuggeschwindigkeiten einen guten Reinigungseffekt zu erreichen.

Die erfindungsgemäße Scheibenreinigungsanlage ist dadurch gekennzeichnet, daß der Modulationshub mit zunehmender Fahrzeuggeschwindigkeit verringert wird, was zu dem Vorteil führt, daß sowohl bei niedrigen als auch bei höheren Fahrzeuggeschwindigkeiten eine größere Fläche der Scheibe mit Reinigungsflüssigkeit benetzt wird. Dabei wird die Erkenntnis ausgenutzt, daß in horizontaler Richtung der Scheibenwischer für eine ausreichende Flüssigkeitsverteilung sorgt und die erfindungsgemäße Modulation eine vorteilhafte Verteilung des Wassers vor dem Scheibenwischer bewirkt. In vertikaler Richtung erfolgt insbesondere bei hohen Fahrgeschwindigkeiten eine Verteilung durch den Fahrtwind, so daß der Modulationshub ohne Nachteil der vertikalen Verteilung verringert werden kann bei gleichzeitig vollständiger Ausnutzung der versprühten Reinigungsflüssigkeit. Bei geringerer Fahrgeschwindigkeit und damit geringer Verteilung der Reinigungsflüssigkeit durch den Fahrtwind erfolgt die gute vertikale Verteilung durch den größeren Modulationshub.

Im weiteren lassen sich folgende Vorteile erzielen: Durch die größere Benetzungsfläche ergibt sich ein besserer Reinigungseffekt und damit eine bessere Sicht. Ferner läßt sich der Bedarf an Reinigungsflüssigkeit reduzieren, was wiederum ein kleineres Volumen des Flüssigkeitsbehälters ermöglicht. Schließlich wird durch die bessere Benetzung der Verschließ der Wischerblätter und der Frontscheibe verringert.

Die Steuerung des Modulationshubes erfolgt in vorteilhafter Weise durch einen Mikrocomputer, wobei vorzugsweise die Abhängigkeit des Modulationshubes von der Fahrzeuggeschwindigkeit in Form einer durch Geradenabschnitte approximierten Kennlinie gespeichert ist.

Eine Weiterbildung der Erfindung besteht darin, daß der Druck der Reinigungsflüssigkeit modulierbar ist. Dabei wird vorzugsweise die Drehzahl der Pumpe modulierbar. Bei einer vorteilhaften Ausführungsform dieser Weiterbildung wird die für die Pumpe erforderliche Leistung dadurch reduziert, daß der Pumpe ein pulsbreitenmodulierbarer Strom zuführbar ist, wobei die Pulsfrequenz wesentlich höher als die Modulationsfrequenz ist.

Eine andere Weiterbildung der Erfindung besteht darin, daß Mittel zur kurzzeitigen Erhöhung des Drucks der Reinigungsflüssigkeit nach dem Einschalten vorgesehen sind. Dadurch werden eventuell in der Düse vorhandene Schmutzpartikel augestoßen.

Anstelle der Modulation des Drucks der Reinigungsflüssigkeit oder zusätzlich kann gemäß einer anderen Weiterbildung der Erfindung vorgesehen sein, daß der Anstellwinkel der Düse modulierbar ist.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: eine schematische Darstellung einer Scheibenreinigungsanlage und
- Fig. 2: ein Blockschaltbild einer erfindungsgemäßen Scheibenreinigungsanlage, bei welcher der Druck der Reinigungsflüssigkeit moduliert wird.

Gleiche Teile sind in den Figuren mit gleichen Bezugszeichen versehen.

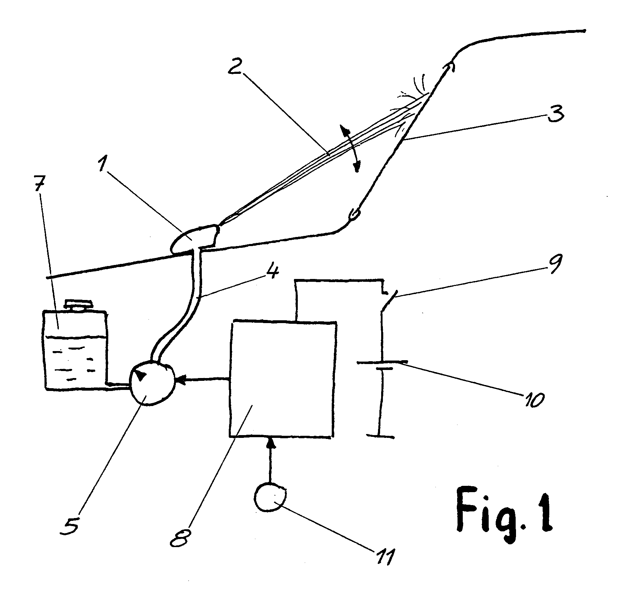

Bei der Scheibenreinigungsanlage nach Fig. 1 ist ein aus einer Düse 1 austretender Sprühstrahl 2 auf die Frontscheibe 3 eines Kraftfahrzeugs gerichtet. Über einen Schlauch 4 ist die Düse 1 mit einer elektrisch angetriebenen Pumpe 5 verbunden, die aus einem Vorratsbehälter 7 die Reinigungsflüssigkeit pumpt.

Der im einzelnen nicht dargestellte Motor der Pumpe 5 erhält eine modulierte Betriebsspannung aus einem Steuergerät 8, das über einen Schalter 9 an die Fahrzeugbatterie 10 angeschlossen ist. Ferner werden von einem Geschwindigkeitssensor 11 dem Steuergerät 8 Tachosignale zugeführt. Die Änderung der Richtung des Sprühstrahls 2 als Folge der Modulation ist durch einen Doppelpfeil in Fig. 1 gekennzeichnet.

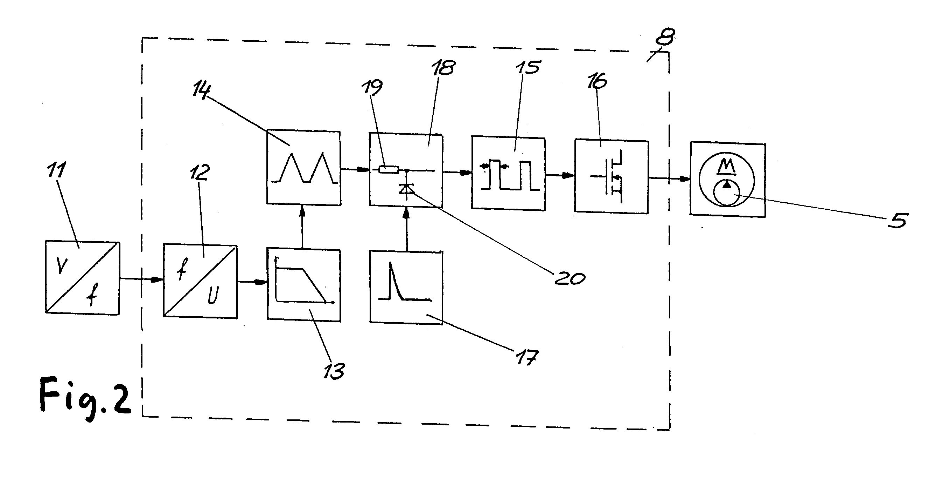

Fig. 2 zeigt ein Blockschaltbild des Steuergerätes 8. Die Tachoimpulse vom Geschwindigkeitssensor 11 werden zunächst einem Frequenz-Spannungswandler 12 zugeführt, an dessen Ausgang eine der Fahrzeuggeschwindigkeit proportionale Spannung ansteht. Diese Spannung wird über eine Schaltung 13 mit einer derartigen Kennlinie geleitet, daß bei niedrigen Geschwindigkeiten die Ausgangsspannung δUₛ auf einem Maximalwert konstant bleibt und bei höheren Fahrzeuggeschwindigkeiten bis zur Maximalgeschwindigkeit vₘₐₓ etwa linear abfällt. Mit der Ausgangsspannung δUₛ der Schaltung 13 wird ein Amplitudenmodulator 14 angesteuert, der eine im wesentlichen dreieckförmige Spannung abgibt, deren Amplitude von δUₛ abhängt und deren Frequenz f_{M} im wesentlichen konstant ist. Mit dieser Spannung wird die Breite von Impulsen in einem Pulsbreitenmodulator 15 moduliert, wobei die Frequenz f der Impulse wesentlich größer als die Modulationsfrequenz f_{M} ist. Die derart modulierten Impulse gelangen über eine Leistungsendstufe 16 zum Motor der Pumpe 5.

Um beim Einschalten der Scheibenreinigungsanlage mit einem Druckstoß eventuelle Verunreinigungen aus der Düse zu entfernen, wird in einer Schaltung 17 ein Impuls erzeugt, der in der Schaltung 18 der dreieckförmigen Spannung überlagert wird. Vorzugsweise besteht die Schaltung 18 aus einem Widerstand 19 und einer Diode 20, wobei letztere nur leitend ist, wenn die von der Schaltung 17 zugeführte Spannung größer als der jeweilige Wert der dreieckförmigen Spannung ist.

Das Steuergerät kann anstatt mit einzelnen analoge Signale verarbeitenden Baugruppen mit einem Mikrocomputer realisiert werden, welcher nach einem geeigneten Programm arbeitet.

## Patentansprüche

1. Scheibenreinigungsanlage, insbesondere für die Frontscheibe (3) eines Kraftfahrzeuges, mit mindestens einer Düse (1) zum Versprühen von Reinigungsflüssigkeit in einem auf die zu reinigende Scheibe (3) gerichteten Strahl (2), dessen Strahlrichtung vertikal periodisch modulierbar ist, dadurch gekennzeichnet, daß der Modulationshub mit zunehmender Fahrzeuggeschwindigkeit verringert wird.

2. Scheibenreinigungsanlage nach Anspruch 1, dadurch gekennzeichnet, daß zur Steuerung ein Mikrocomputer vorgesehen ist.

3. Scheibenreinigungsanlage nach Anspruch 2, dadurch gekennzeichnet, daß die Abhängigkeit des Modulationshubes von der Fahrzeuggeschwindigkeit in Form einer durch Geradenabschnitte approximierten Kennlinie gespeichert ist.

4. Scheibenreinigungsanlage nach Anspruch 1, dadurch gekennzeichnet, daß der Druck der Reinigungsflüssigkeit modulierbar ist.

5. Scheibenreinigungsanlage nach Anspruch 4, dadurch gekennzeichnet, daß die Drehzahl der Pumpe (5) modulierbar ist.

6. Scheibenreinigungsanlage nach Anspruch 5, dadurch gekennzeichnet, daß der Pumpe (5) ein pulsbreitenmodulierbarer Strom zuführbar ist, wobei die Pulsfrequenz wesentlich höher als die Modulationsfrequenz ist.

7. Scheibenreinigungsanlage nach einem der vorhergehenden Ansprüche, dadurch gekennzeichnet, daß Mittel zur kurzzeitigen Erhöhung des Drucks der Reinigungsflüssigkeit nach dem Einschalten vorgesehen sind.

8. Scheibenreinigungsanlage nach Anspruch 1, dadurch gekennzeichnet, daß der Anstellwinkel der Düse (1) modulierbar ist.

## Claims

1. Window cleaning apparatus, especially for the windscreen (3) of a motor vehicle, with at least one nozzle (1) for the spraying of cleaning liquid in a jet (2) directed on to the window (3) being cleaned, the direction of the said jet being variable in vertically periodic manner, characterised in that the variation cycle is reduced as the vehicle speed increases.

2. Window cleaning apparatus according to claim 1, characterised in that a microcomputer is provided for control purposes.

3. Window cleaning apparatus according to claim 2, characterised in that the dependence of the variation cycle on the vehicle speed is stored in the form of a characteristic curve approximated by straight sections.

4. Window cleaning apparatus according to claim 1, characterised in that the pressure of the cleaning liquid is variable.

5. Window cleaning apparatus according to claim 4, characterised in that the rotational speed of the pump (5) is variable.

6. Window cleaning apparatus according to claim 5, characterised in that a pulse width modulatable current is adapted to be fed to the pump (5), the pulse frequency being substantially higher than the modulation frequency.

7. Window cleaning apparatus according to one of the preceding claims, characterised in that means are provided for short-duration increasing of the pressure of the cleaning liquid after the switching-on.

8. Window cleaning apparatus according to claim 1, characterised in that the setting angle of the nozzle (1) is variable.

## Revendications

1. Dispositif de nettoyage de vitres, en particulier pour le pare-brise (3) d'un véhicule automobile, présentant au moins un gicleur (1) pour pulvériser du liquide de nettoyage en un jet (2) qui est dirigé vers le pare-brise (3) à nettoyer, et dont la direction est modulable périodiquement dans le sens vertical, caractérisé par le fait que la course de modulation est diminuée au fur et à mesure que la vitesse du véhicule augmente.

2. Dispositif de nettoyage de vitres, selon la revendication 1, caractérisé par le fait qu'un micro-ordinateur est prévu pour la commande.

3. Dispositif de nettoyage de vitres, selon la revendication 2, caractérisé par le fait que la dépendance de la course de modulation, vis-à-vis de la vitesse du véhicule, est mémorisée sous la forme d'une courbe caractéristique établie, par approximation, au moyen de segments de ligne droite.

4. Dispositif de nettoyage de vitres, selon la revendication 1, caractérisé par le fait que la pression du liquide de nettoyage peut être modulée.

5. Dispositif de nettoyage de vitres, selon la revendication 4, caractérisé par le fait que la vitesse angulaire de la pompe (5) peut être modulée.

6. Dispositif de nettoyage de vitres, selon la revendication 5, caractérisé par le fait qu'un courant à largeur d'impulsions modulable peut être délivré à la pompe (5), la fréquence des impulsions étant notablement supérieure à la fréquence de modulation.

7. Dispositif de nettoyage de vitres, selon l'une des revendications précédentes, caractérisé par le fait que des moyens sont prévus pour un accroissement de courte durée de la pression du liquide de nettoyage après l'enclenchement.

8. Dispositif de nettoyage de vitres, selon la revendication 1, caractérisé par le fait que l'angle d'attaque du gicleur (1) peut être réglé.
